## Europäisches Patentamt

## European Patent Office

## Office européen des brevets

(19)

(11) Veröffentlichungsnummer: **0 076 930**
**A1**

(12) **EUROPÄISCHE PATENTANMELDUNG**

(21) Anmeldenummer: **82108495.1**

(22) Anmeldetag: **15.09.82**

(51) Int. Cl.³: **G 01 F 23/14,** G 01 F 23/16, G 01 F 23/18

(30) Priorität: **14.10.81 DE 8129968 U**

(43) Veröffentlichungstag der Anmeldung: **20.04.83**
**Patentblatt 83/16**

(84) Benannte Vertragsstaaten: **AT BE CH FR GB IT LI NL SE**

(71) Anmelder: **MESSER GRIESHEIM GMBH, Patentabteilung Hanauer Landstrasse 330, D-6000 Frankfurt/Main 1 (DE)**

(72) Erfinder: **Thoma, Klemens, Goethestrasse 106, D-4150 Krefeld (DE)**
Erfinder: **Volker, Wolfgang, Pastorsbusch 35, D-4154 Tönisvorst 1 (DE)**

(54) Vorrichtung zur Füllstandsanzeige von flüssigem Stickstoff in isolierten Lagerbehältern.

(57) Bei Lagerbehältern, die mit flüssigem Stickstoff als Kältemittel betrieben werden, besteht vielfach das Bedürfnis, den jeweiligen Füllstand des flüssigen Stickstoffes unmittelbar optisch am Lagerbehälter ablesen zu können.

Eine derartige optische Ablesung ermöglicht ein Rohr (5), welches vom Boden des Lagerbehälters ausgeht und mit flüssigem Stickstoff beaufschlagt ist. Das Rohr wird durch die Isolierung des Lagerbehälters zu dessen oberem Rand nach außen geführt und an eine Druckmeßeinrichtung (6) angeschlossen.

Infolge von Wärmeeinfall befindet sich im Rohr (5) abgesehen vom bodennahen Bereich, gasförmiger Stickstoff. Je nach Füllstandshöhe steht dieser unter einem bestimmten Druck, so daß die Anzeige der Druckmeßeinrichtung (6) ein unmittelbares Maß für den Füllstand ist.

Die Anzeige der Druckmeßeinrichtung kann zusätzlich, zum Beispiel mittels induktiver Miniaturnäherungsschalter (14), zum Betrieb eines automatischen Nachfüll- und Alarmsystems ausgenutzt werden.

EP 0 076 930 A1

0076930
EM 994
Ba/Ha
13.8.1981

- 1 -

MESSER GRIESHEIM GMBH                MG 1290

Kennwort: Optische Füllstandsanzeige      EM 994

Erfinder: K. Thoma

W. Volker                      Ordner A

## Vorrichtung zur Füllstandsanzeige von flüssigem Stickstoff in isolierten Lagerbehältern

Die Erfindung betrifft eine Vorrichtung zur Füllstandsanzeige von flüssigem Stickstoff in isolierten Lagerbehältern die mit flüssigem Stickstoff als Kältemittel betrieben werden.

In mit flüssigem Stickstoff betriebenen Lagerbehältern werden beispielsweise organische Materialien gelagert. Trotz hochwertiger Isolierung läßt sich ein geringer Wärmeeinfall in derartige Lagerbehälter nicht vermeiden, als dessen Folge der flüssige Stickstoff allmählich verdampft und aus dem Lagerbehälter entweicht. Der Stickstoffvorrat muß daher von Zeit zu Zeit ergänzt werden. Zur Kontrolle des Füllstandes wird gemäß heutiger Praxis der Behälter geöffnet und die Füllhöhe durch Einblick festgestellt. Jedes Öffnen ist mit einer kräftigen Wärmezufuhr

- 2 -

und entsprechenden Verlusten an flüssigem Stickstoff verbunden. Außerdem schlägt sich kondensierendes Wasser aus der Luft in Form von Eis an der Innenwand des Behälters nieder.

Der Erfindung liegt daher die Aufgabe zugrunde, eine Vorrichtung zur Füllstandsanzeige zu schaffen, welche eine ständige optische Füllstandskontrolle ermöglicht, ohne daß der Lagerbehälter geöffnet werden muß. Darüberhinaus soll die Vorrichtung mechanisch einfach sein und die Isolierung des Behälters möglichst wenig beeinträchtigen.

Bei einer Vorrichtung zur Füllstandsanzeige von flüssigem Stickstoff in isolierten Lagerbehältern die mit flüssigem Stickstoff als Kältemittel betrieben werden, wird dies gemäß der Erfindung erreicht durch ein vom Boden des Gefriergerätes ausgehendes und vom flüssigem Stickstoff beaufschlagtes Rohr, welches durch die Isolierung des des Lagerbehälters aus dessen oberem Rand herausgeführt ist und mit einer Druckmeßeinrichtung in Verbindung steht.

Die Druckmeßeinrichtung kann beliebig sein, zum Beispiel ein Manometer. Bevorzugt wird jedoch eine Druckmeßeinrichtung, die aus einem durchsichtigen Zylinder besteht, in welchem sich ein federbelasteter Kolben befindet. Der Kolben wird einerseits von dem im Rohr befindlichen, unter Druck stehenden Stickstoff, andererseits vom äußeren Luftdruck beaufschlagt. Die Stellung des Kolbens ist eine direkte Anzeige des jeweiligen Füllstandes. Zweckmäßigerweise werden auf dem Zylinder entsprechende Markierungen angebracht.

In weiterer Ausgestaltung der Erfindung kann die Druckmeßeinrichtung in ein automatisches Nachfüll- und Alarmsystem integriert werden. Beispielsweise können durch die Druckmeßeinrichtung induktive Miniaturnäherungsschalter betätigt werden, die bei einem zur Neige gehenden Stickstoffvorrat ein automatisches Nachfüllen oder Alarm auslösen.

Die Erfindung beruht auf der Überlegung, daß sich im unteren Teil des Rohres zwar flüssiger Stickstoff befindet, in dem durch die Isolierung nach oben geführten Teil des Rohres jedoch gasförmiger Stickstoff, da dieser Teil des Rohres infolge von Wärmeleitung und Wärmestrahlung so warm ist, daß sich in ihm kein flüssiger Stickstoff halten kann. Je nach dem Füllstand des flüssigen Stickstoffes im Lagerbehälter steht der gasförmige Stickstoff im oberen Teil des Rohres daher unter einem mehr oder weniger hohen Druck, welcher zur Anzeige der Füllhöhe dient.

Ein Ausführungsbeispiel der Erfindung soll anhand der beigefügten Zeichnungen erläutert werden.

Es zeigen:

Fig. 1   Einen Lagerbehälter im Schnitt

Fig. 2   Die Druckmeßeinrichtung der Füllstandsanzeige von Fig. 1 im Schnitt.

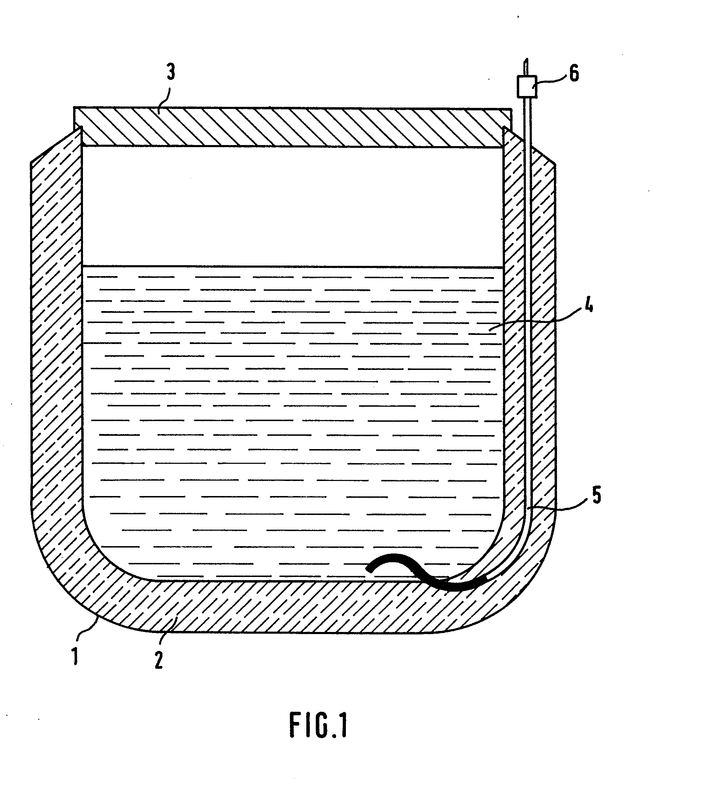

Der in Fig. 1 dargestellte Lagerbehälter besteht aus einem doppelwandigen Behälter 1, der mit einer Isolierung 2 versehen ist. Der Behälter 1 ist durch einen Deckel 3 verschlossen, der mit einem in der Zeichnung nicht dargestellten Sicherheitsventil versehen ist. In dem Behälter 1 befindet sich der flüssige Stickstoff 4, in welchem die zu konservierenden Materialien gelagert werden.

Erfindungsgemäß ist in dem Lagerbehälter ein Rohr 5 angeordnet,welches vom Boden des Behälters 1 ausgeht, mit dem flüssigen Stickstoff beaufschlagt ist und durch die Isolierung 2 aus dem oberen Rand des doppelwandigen Behälters 1 herausgeführt ist. An das Rohr 5 ist eine Druckmeßeinrichtung 6 angeschlossen.

Flüssiger Stickstoff kann sich nur im unteren Teil des Rohres 5 halten, der schwarz gezeichnet ist. Der obere Teil des Rohres 5 ist infolge des unvermeidlichen Wärmeeinfalls so warm, daß in ihm nur gasförmiger Stickstoff bestehen kann. Für die Funktion der erfindungsgemäßen Vorrichtung ist es unerheblich,an welcher Stelle im Rohr 5 sich die Übergangsstelle von flüssigem zu gasförmigen Stickstoff befindet. Je nach der Füllhöhe des flüssigen Stickstoffes 4 steht der gasförmige Stickstoff im Rohr 5 unter einem mehr oder weniger hohen Druck der durch die Druckmeßeinrichtung 6 angezeigt wird und als Maß für den Füllstand dient.

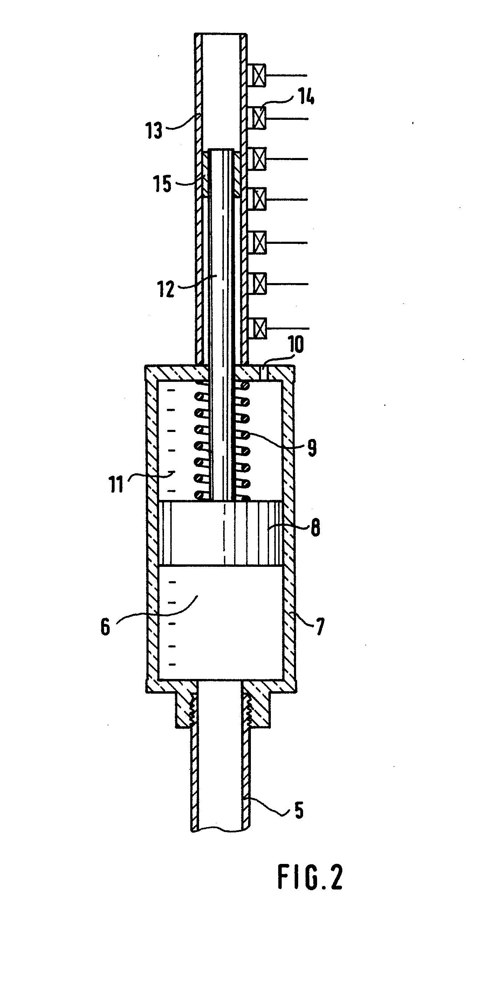

In Fig. 2 ist eine bevorzugte Druckmeßeinrichtung 6 in schematischer Form dargestellt. Die Druckmeßeinrichtung 6 besteht aus einem durchsichtigen Zylinder 7, der auf das Rohr 5 aufgeschraubt ist. In dem durchsichtigen Zylinder 7 befindet sich ein Kolben 8, welcher durch eine Feder 9 belastet ist. Der Kolben 8 wird von einer Seite durch den Druck des gasförmigen Stickstoffes im Rohr 5 beaufschlagt. Auf die andere Seite des Kolbens 8 wirkt durch eine Bohrung 10 der äußere Luftdruck. Durch die Stellung des Kolbens 8 wird die Höhe des Füllstandes im Gefriergerät angezeigt. Auf dem durchsichtigen Zylinder 7 ist eine Skala 11 angebracht, welche die Ablesemöglichkeit vereinfacht.

Um die Druckmeßeinrichtung 6 in ein automatisches Nachfüll- und Alarmsystem zu integrieren, ist auf dem Kolben 8 eine Stange 12 befestigt, die in einem Rohr 13 geführt ist,
auf dem eine Reihe von induktiven Miniaturnäherungsschaltern 14 angeordnet sind. Auf der Stange 12 ist ein Metallring 15 angebracht, welcher die einzelnen Miniaturnäherungsschalter betätigt. Mit Hilfe der Miniaturnäherungsschalter
14 kann die Füllstandshöhe auf elektrischem Wege an einer
entfernten Stelle angezeigt werden. Es ist auf diese Weise
möglich, bei einer Vielzahl von Lagerbehältern die einzelnen Füllstandsanzeigen an einer Stelle zentral zu erfassen. Ferner kann mit Hilfe der induktiven Miniaturnäherungsschalter 14 ein automatisches Nachfüllen eingeleitet werden, wenn der Vorrat an flüssigem Stickstoff zur
Neige geht. Entsprechend kann gegebenenfalls ein Alarm
ausgelöst werden.

Das Rohr 13 kann auch aus durchsichtigem Material bestehen.
Die jeweilige Stellung der Stange 12 ermöglicht dann eine
unmittelbare optische Kontrolle des Füllstandes. Es erübrigt
sich in diesem Fall, den Zylinder 7 durchsichtig zu gestalten.

Durch Austausch der Feder 9 kann der Übertragungsbereich
variiert werden.

Die Erfindung ist nicht auf die in Fig. 2 dargestellte
Druckmeßeinrichtung beschränkt, es können vielmehr
beliebige andere Druckmeßeinrichtungen verwendet werden.

0076930
EM 994
Ba/Ha
13.8.1981
MG 1290

## Ansprüche

1. Vorrichtung zur Füllstandsanzeige von flüssigem Stickstoff in isolierten Lagerbehältern die mit flüssigem Stickstoff als Kältemittel betrieben werden, gekennzeichnet durch ein vom Boden des Lagerbehälters ausgehendes und vom flüssigen Stickstoff beaufschlagtes Rohr (5), welches durch die Isolierung (2) des Lagerbehälters aus dessen oberem Rand herausgeführt ist und mit einer Druckmeßeinrichtung (6) in Verbindung steht.

2. Vorrichtung nach Anspruch 1, dadurch gekennzeichnet, daß die Druckmeßeinrichtung aus einem in einem durchsichtigen Zylinder (7) geführten federbelasteten Kolben (8) besteht, der einerseits von dem im Rohr befindlichen, unter Druck stehenden Stickstoff, andererseits vom äußeren Luftdruck beaufschlagt ist.

3. Vorrichtung nach Anspruch 2, gekennzeichnet durch vom Kolben betätigte induktive Miniaturnäherungsschalter (14), die Bestandteile eines automatischen Nachfüll- und Alarmsystems sind.

FIG.1

FIG.2

## EINSCHLÄGIGE DOKUMENTE

EP 82108495.1

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | <u>FR - A - 770 288</u> (ZENNER)<br><br>* Seite 3, Zeilen 55-62; Fig. 2 *<br><br>-- | 1 | G 01 F 23/14<br><br>G 01 F 23/16<br><br>G 01 F 23/18 |
| A | <u>FR - A - 1 054 025</u> (BENDIX AVIA-TION CORPORATION)<br><br>* Seite 2, linke Spalte; Absatz 3-5; Fig. 1 *<br><br>-- | 1 | |
| A | <u>DD - A - 33 463</u> (SEDLACEK)<br><br>* Fig. *<br><br>---- | | |

**RECHERCHIERTE SACHGEBIETE (Int. Cl. ³)**

G 01 F 23/00

X Der vorliegende Recherchenbericht wurde für alle Patentansprüche erstellt.

| Recherchenort | Abschlußdatum der Recherche | Prüfer |
|---|---|---|
| WIEN | 25-01-1983 | STÖGER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82